# EUROPEAN PATENT SPECIFICATION

(11) **EP 1 187 766 B1**
(45) Date of publication and mention of the grant of the patent: **06.08.2003**
(21) Application number: 99929607.2
(22) Date of filing: 23.06.1999
(51) Int. Cl.: B65B 55/02, B65B 55/14, A23L 3/10, A23L 3/12, A23L 3/00, A23L 3/16

(54) **APPARATUS AND METHOD FOR HEAT-TREATMENT OF FOOD PRODUCTS IN PLASTIC BAGS**
APPARAT UND VERFAHREN ZUR HEIZBEHANDLUNG VON NAHRUNGSMITTELN IN KUNSTSTOFFSÄCKEN
APPAREIL ET PROCEDE DE TRAITEMENT THERMIQUE DE PRODUITS ALIMENTAIRES CONTENUS DANS DES SACS EN PLASTIQUE

(43) Date of publication of application: 20.03.2002
(73) Proprietor: Boldizsar, Istvan, 2000 Szentendre (HU)
(72) Inventor: Boldizsar, Istvan, 2000 Szentendre (HU)
(74) Representative: Schwabe - Sandmair - Marx
(86) International application number: HU9900048
(87) International publication number: WO01000490

(56) References cited:
- WO-A-96/09209
- DE-A- 4 442 709
- US-A- 4 059 919
- US-A- 4 092 111
- DECIO, P.: "New Findings of Filling in Aseptic Bag-in-Box" FRUIT PROCESSING, vol. 7, no. 2, - 1997 pages 60-62, XP000866198 Brugherio MI, Italy
- ANONYMOUS: "Aseptic bag-in-box system." FOOD ENGINEERING INTERNATIONAL., vol. 7, no. 3, 1982, page 83 XP000866023 XX, XX ISSN: 0148-4478
- STEPHENSON: "Aseptic packaging comes to bag-in-box" FOOD MANUFACTURE., vol. 61, no. 4, 1986, pages 39-40, XP002126753 MORGAN-GRAMPIAN (PROCESS PRESS) LTD. LONDON., GB ISSN: 0015-6477
- PATENT ABSTRACTS OF JAPAN vol. 009, no. 078 (C-274) & JP 59 210874 A (OOHIRA HIDEKAZU KAKOU KK ET AL.)

## Description

Mainly two packing materials are used in the canned food industry - jars and tins /glass and metal containers/. Efforts are made on using up-to-date plastic materials for packing preserved food, for example multilayer and heat-resisting foils. These materials have the advantage of easy tailoring - the ability of creating big size units. The traditional packing materials - glass and tin - are not suitable for these purposes because of mechanical and financial reason. From the market side the demand on big size - and low cost - canned food comes from the catering industry /hospitals, schools, canteens and so/.

The problem is that the traditional technologies are not suitable for heating and subsequent cooling of big size units providing the required temperature also in the centre of the can. We remark that asseptic technologies use multilayer foils also for big industrial units, but exclusively for liquiform foodstuff such as fruit concentrate and tomato paste, for lumpy products, such as gerkhins, these technologies are not suitable.

Document US-A-4 092 111, on which the preamble of claim 1 is based, discloses an apparatus for the heat treatment of sealed packages using liquid distributed over the surface of the packages.

The heat-treatment in the subject-matter patent is solved in the following way: the plastic container is sealed after being filled with foodstuff and poured on, but two pipes are lead inside the container in order to let the pouring liquid being circulated, the holes for the pipes being located above the pouring liquid level and the end of the pipes are below the level. The holes should be smaller than the diameter of the pipes for tightness. These pipes are connected through a pump to the secondary circuit of a heat exchanger. Providing warm water or steam on the primary circuit the pouring liquid warms up - simultaneously in the container, pump, pipes and heat exchanger. As the circuit of the pouring liquid is hermetically closed, the pouring liquid is pasteurized at the same time in the container; the pump, the pipes and heat exchanger. Providing cold water on the primary circuit of the heat exchanger the foodtsuff is cooled down. After the pasteurisation the pipes are removed and the container is immediately sealed again below the holes precluding the possibility of reserve infection.

Naturally, on the secondary side of the heat exchanger several containers can be pasteurised at the same time.

The described technology can be used for preserving foodstuff with low Ph value at a temperature below 100 Celsius degree. Locating the container/s/ with foodstuffs in a pressure-tight vessel /autoclave/ the pressure during the warming up process can be increased so the pouring liquid will not boil up. In this way the treatment can be done at a temperature above 100 Celsius degree and foodstuff with high Ph value such as green pees, maize can be also preserved (by sterilization).

During the process the work of the pump is controlled by the temperature in the container(s) providing the required amount of heat. Before starting the process the pipes in the secondary circuit should be de-aerated, providing the stable level of pouring liquid in the container(s). The finished container should be placed in a cardboard box against tearing (BAG-IN-BOX packing).

## Claims

1. Apparatus for pasteurising of food products comprising a heat exchanger, a pump on the secondary circuit of the exchanger and metal or plastic pipes, **characterised by** the pipe connecting the exchanger, pump and a container or containers with foodstuff, by the pipes being suitable for being lead inside the container in order to let the pouring liquid circulate, and by hermetic separation of the pouring liquid in the container, pump, pipes and heat exchanger.

2. Apparatus according to claim 1, wherein the container or containers with foodstuff is or are placed in a pressure-tight vessel or autoclave allowing to increase and decrease the pressure in the vessel.

3. Method for pasteurising foodstuff in plastic container in apparatus according to claim 1, **characterised by** circulating the pouring liquid in the container or containers with foodstuffs such that the pipes are lead inside the container in order to let the pouring liquid be circulated, and increasing and decreasing the temperature of the pouring liquid by providing high or low temperature on the primary circuit of the heat exchanger.

4. Method for sterilising foodstuffs according to claim 3 **characterised by** placing the container in a pressure-tight vessel or autoclave and simultaneously increasing and decreasing the pressure in the pressure-tight vessel, providing temperature of the pouring liquid above 100 Celsius degree.

5. Method according to any of the claims 3 and 4, wherein the container is sealed after pasteurisation in order to obtain pasteurised foodstuff sealed in a container.

## Patentansprüche

1. Apparat zum Pasteurisieren von Nahrungsmittelprodukten, der einen Wärmeaustauscher, eine Pumpe auf dem Sekundärkreis des Austauschers und metallische oder Kunststoff-Röhren umfasst, **dadurch gekennzeichnet, dass** die Röhre den Austauscher, eine Pumpe und einen Behälter oder Behälter mit Nahrungsmitteln verbindet, und dadurch, dass die Röhren geeignet sind, in den Behältern geführt zu werden, um die strömende Flüssigkeit bzw. Aufgießflüssigkeit zirkulieren zu lassen, und durch hermetische Trennung der strömenden Flüssigkeit bzw. Aufgießflüssigkeit in dem Behälter, der Pumpe, den Röhren und dem Wärmetauscher.

2. Apparat nach Anspruch 1, bei welchem der Behälter oder die Behälter mit Nahrungsmitteln in einem druckdichten Gefäß oder einem druckdichten Autoklav platziert ist oder sind, wobei ermöglicht wird, den Druck in dem Gefäß zu erhöhen und zu erniedrigen.

3. Verfahren zum Pasteurisieren von Nahrungsmitteln in einem Kunststoffbehälter im Apparat gemäß Anspruch 1, **gekennzeichnet durch** Zirkulierung der Aufgießflüssigkeit bzw. strömenden Flüssigkeit in dem Behälter oder den Behältern mit Nahrungsmitteln derartig, dass die Röhren in das Innere des Behälters geführt werden, um die Gießflüssigkeit bzw. Fließflüssigkeit zirkulieren zu lassen, und **durch** das Erhöhen und Erniedrigen der Temperatur der Aufgießflüssigkeit bzw. strömenden Flüssigkeit, indem eine hohe oder niedrige Temperatur auf dem Primärkreis des Wärmeaustauschers vorgesehen bzw. bereitgestellt wird.

4. Verfahren zum Sterilisieren von Nahrungsmitteln gemäß Anspruch 3, **gekennzeichnet durch** Platzierung des Behälters in einem druckdichten Gefäß oder einem Autoklav und **durch** simultane Erhöhung und Erniedrigung des Drucks in dem druckdichten Gefäß, wobei eine Temperatur der Aufgießflüssigkeit bzw. strömenden Flüssigkeit oberhalb von 100 °C bereit gestellt wird.

5. Verfahren nach einem der Ansprüche 3 und 4, bei welchem der Behälter nach einer Pasteurisierung abgedichtet wird, um pasteurisierte Nahrungsmittel zu erhalten, die in einem Behälter verschlossen sind.

## Revendications

1. Appareil pour la pasteurisation de produits alimentaires comprenant un échangeur de chaleur, une pompe sur le circuit secondaire de l'échangeur et des tuyaux en métal ou plastique, **caractérisé par** des tuyaux reliant l'échangeur, la pompe et un conteneur ou des conteneurs avec des produits alimentaires, les tuyaux convenant pour être introduits dans le conteneur afin de laisser circuler le liquide de remplissage, et par une séparation hermétique du liquide de remplissage dans le conteneur, la pompe, les tuyaux et l'échangeur de chaleur.

2. Appareil suivant la revendication 1, dans lequel le conteneur ou les conteneurs avec des produits alimentaires sont placés dans un récipient étanche à la pression ou autoclave, permettant d'augmenter et de diminuer la pression dans le récipient.

3. Procédé de pasteurisation de produits alimentaires dans un conteneur en plastique dans un appareil suivant la revendication 1, **caractérisé par** la circulation du liquide de remplissage dans le conteneur ou les conteneurs avec des produits alimentaires, tel que les tuyaux sont introduits dans le conteneur afin de laisser circuler le liquide de remplissage, et par l'augmentation et la diminution de la température du liquide de remplissage en procurant une température élevée ou basse dans le circuit primaire de l'échangeur de chaleur.

4. Procédé de pasteurisation de produits alimentaires suivant la revendication 3, **caractérisé par** le placement du conteneur dans un récipient étanche à la pression ou autoclave et l'augmentation et la diminution simultanées de la pression dans le récipient étanche à la pression, amenant la température du liquide de remplissage au-dessus de 100 degrés Celsius.

5. Procédé suivant l'une quelconque des revendications 3 et 4, dans lequel le conteneur est scellé après la pasteurisation afin d'obtenir des produits alimentaires pasteurisés scellés dans un conteneur.
